**Europäisches Patentamt**

**European Patent Office**

**Office européen des brevets**

⑩

(11) Publication number: **0 181 849**
**B1**

(12) **EUROPEAN PATENT SPECIFICATION**

(45) Date of publication of patent specification: **09.05.90**

(21) Application number: **85850362.6**

(22) Date of filing: **11.11.85**

(51) Int. Cl.⁵: **C 04 B 24/10**

(54) **Method for the production of concrete mass.**

(30) Priority: **12.11.84 SE 8405646**

(43) Date of publication of application:
**21.05.86 Bulletin 86/21**

(45) Publication of the grant of the patent:
**09.05.90 Bulletin 90/19**

(84) Designated Contracting States:
**AT BE CH DE FR GB IT LI LU NL SE**

(56) References cited:
**US-A-1 330 058**
**US-A-3 131 074**
**US-A-3 227 569**

(73) Proprietor: **Multistructure Sweden AB**
**Box 8775**
**S-402 76 Göteborg (SE)**

(72) Inventor: **Gustafsson, Gert-Ove**
**Aveskärsgatan 7**
**S-421 60 Västra Frölunda (SE)**
Inventor: **Larsson, Kare**
**Trollsjövägen 50**
**S-237 00 Bjärred (SE)**
Inventor: **Berndtsson, Leif**
**Tagmästaregatan 10**
**S-416 52 Göteborg (SE)**

(74) Representative: **Hagelberg, Anders Torvald**
**Sverker et al**
**Albihn West AB Stora Nygatan 15**
**S-411 08 Göteborg (SE)**

Courier Press, Leamington Spa, England.

# EP 0 181 849 B1

**Description**

The present invention relates to a method for the production of concrete mass. More defined the invention relates to a method for the production of a concrete mass being of a type showing increased climate resistance in the concrete especially with reference to frost cracking. This will according to the invention be obtained by means of additives to the concrete mass.

Additives for concrete are used in order to increase the resistance of the concrete and are of the types for obtaining air entrained concrete or water reducing or plasticizing additives, dispersion agents. To the last mentioned group is also counted super plastizising agents or liquidizing agents.

The advantageous effect according to frost cracking in concrete by means of air entrained concrete was discovered during the fourties in USA accidentally. However first during the seventies the effect of air pores in concrete have been analyzed. Particularly during the last years there have been a demand from e.g. authorities that air entrained concrete has to be used for securing the climate resistance in concrete constructions.

As air pore forming agents are surface-active substances of different origin usable. Among these substances can be mentioned natural wood oils, fats and oils from plants and animals, wetting agents as alkalin salts of sulphated and sulphonated organic substances, watersoluble soaps and derivates from petroleum products. The substances can be soluble in the water in the pores or be deposited and flocculated. Soluble substances will be adsorbed on the surface of the concrete particles. Both ways of working will give an effect of increasing the stability of the air pores. The mentioned agents for forming air pores are in the most used types of anionic agents and their function is often influenced in disadvantageous way by other additives such as fly-ash. They are also influenced by agents for making the concrete mass liquid or additives for making the concrete mass possible to pump. Said circumstances will cause an unreliability in the intended function and in some cases a forming of air pores will not occur. A further limitation is that conventional agents for forming air entrained concrete further is relying on that the sand in the concrete has to contain particles of a certain dimension in a sufficient amount. Sand particles substantially in the fraction of 0.2—0.6 mm are active by forming the air pores during the mixing operation and they are also working as a stabilizer and are separating the air pores from each other and will obstruct uniting of the pores.

The object of the invention is, by eliminating of the mentioned disadvantages, which are connected to known and until now used additives, to achieve a method for the production of concrete mass respectively to obtain the concrete mass produced for the manufacturing of a concrete with a higher climate resistance than what is obtained before and especially a high resistance against frost cracking.

A certain object is to achieve an air pore forming agent which will give a reliable function by forming the pores also together with other additives for example additives for making the concrete mass possible to pump in the form of a liquid concrete mass.

Air will be entrained in the mass and the concrete as a result of the mixing of the fresh concrete irrespective of the fact if an air pore forming agent is added or not. By the stirring air will be drawn into the material when it is moving from the periferi of the mixer towards the center as a result of whirling motions or similar, i.e. different velocities are activated in the mass with air entrapped at certain surfaces where a shearing occurs and by surfaces brought to be tightened. The forming, dispersion and stabilization of determined aire pores is a fundamental process by the forming of emulsions in general. On the other side by intense stirring and especially when turbulence occurs some pores probably will collide so that larger pores will be formed. Such a coalescence is natural as it will give a reduction of the surfaces and is directed towards decreasing of the free energy in the system. The principal of the function of air entraining agents is to hinder coalescence during mixing, transport, concreting and consolidation. This can be obtained if the walls of the pores, by absorbation in the air-water face, are forming a deformable film and at the same time obtain an electrostatic charge giving a repellation. The mechanism is based on the fact that the molecules in air pore forming agents has from each other separated hydrofile and hydrofobe portions, i.e. they are consisting of surface-active substances which will be adsorbed in the air-water face with the hydrofobe directed inwards towards the air. Further effect of the surface-active substance is to lower the surface tension of the water. By means of this effects large air pores can be divided in smaller by shearing. However, the diffusion of air from the pores in the water face has also a determined importance for the distribution of pore dimensions in the pore system. The air pressure within the pores is reciprocally proposional to the pore diameter. The smaller the diameter is the higher is the air pressure. As higher pressure means an increased concentration difference the diffusion velocity will be increased whereby small pores disappear rapidly and larger pores will increase in dimension. The diffusion will therefore result in a coarser air pore system which is not of the character that the resistance of the hardened concrete will increase. The judging of the frost cracking resistance of the concrete usually is based on the determining of a "distance factor", which in general is a term for the closest distance from a point in the solid material to the nearest pore surface.

By freezing the water volume increase with nine percent. If there will not be a volume of air filled pores of at least such a volume that the increased volume of the water can be assimilated the material can crack by the forming of ice. By freezing the water is forced to be pressed through narrow capillary channels in the concrete paste. The pressure of the liquid increases according to the distance to the surface of the air pores

2

and if this distance will be to large the concrete will crack. It is therefore a critical or a maximal distance between the air pores existing. This distance will for a constant volume of the air pores be smaller the smaller the dimension of the air pores is. According to the strength it is also important to have the air pore volume as small as possible. In general an increasing of the air pore volume with one percent will correspond to decreasing of the compression strength of five percent. It is therefore of great importance to obtain a stable air pore system with the smallest possible pore dimension. Thereby the result will be the lowest possible reduction of the strength.

The capillary water absorbation and the possibility to in the praxis reach the critical degree of water occlusion will be decreased by introducing an air pore system. The transport area for the water between the air pores will be decreased and the transport distance will be increased. By means of introducing air pores a further, important effect will occur according to the structural formation of the material between the air pores. The water cement range or water concentration is higher in the layer nearest to the pore wall than on a distance from the same in the concrete. By hardening the carrying material between the air pores will be stronger due to its lower porosity than what has bearing to the average value for the concrete in whole. The lower porosity will also give a lower capillary absorbation velocity as the capillary channels will have smaller diameters. This is a further contributing reason to slower capillary absorbation velocity in the material with an air pore system and especially in systems with small air pores.

The existence of an air pore system which is optimal to its geometrical structure is necessary but not sufficient to reach good resistance properties. One has found that an air pore system with pore walls not repelling water will not give the concrete as high resistance against frost cracking as an air pore system the pore walls of which are hydrofobe. The way of function by air pore forming agents will result in that its hydrofobe ends will be directed towards the air within the pores. When the hydration has been started the surface of the air pore can more or less be covered of hydration products which to their nature are hydrofile. Macro-molecular surface-active substances, polymere particles and other substances can preserve a part of the hydrofobe character without a higher degree of reduction of the same by means of the hydrations products.

From the practice it is well known that the concrete which contains sand with particles smaller than 0.125 mm and with a marked low content of particles in the range 0.2—0.6 mm will have a pore system which is not effective against frost cracking. It is in such cases not possible to obtain sufficient large air volume and the desired distribution of the pores. Contrary, determined better results will be obtained when the filler part in a high degree will be replaced by particles of the fraction 0.2—0.6 mm.

The group of substances onto which the present invention is based eliminates several disadvantageous which prior known air pore forming agents are connected to. By the air entrapping during the mixing procedure it is by utilizing of the invention of no importance how the fraction of the particles in the paste or concrete is chosen. This can be proved in a simple way by mixing cement paste only, i.e. cement and water, with the proposed additive. Thereby an air pore system of predetermined volume and the correct pore distribution will be obtained. With the utilizing of the same mixer a corresponding air system is not obtainable if other, prior known air pore agents instead are used. By the most known additives no air pore system will be generated at all. Further is obtained the important property that the air pore forming agent in question will stabilize the air pores by securing the pores in the cement paste, by strengthening of the pore walls and by prevention of air diffusion between the pores.

Consequently, the object of the invention is to specify a method for the production of concrete mass making it possible to reach the properties mentioned in the foregoing with the increasing of the quality of the finished concrete construction they will result in.

The object of the invention will in short be obtained by means of using of cereal storage proteins as an additive for obtaining an air entrained concrete.

Use of gluten has before been suggested in US Patent 3 13 074, Thompson et al. This patent concerns stabilisation of natural soils and is not directed towards air entrained concrete. The method is particularly suited for fine-grained soils, for example silt and clay. Proteins are mixed with alkalic substances and are added to the soils as binder in connection with preparation. In most cases casein is used as the protein, and calcium hydroxide, Portland cement and a combination thereof are used as the alkalic substances. (Calcium hydroxide along with other substances, is formed when hydrating Portland cement). The amount of protein added to the soils is about ten times that of a mixture, prepared according to the present invention, the amount stated being 0.7—2% by weight of the dry natural soil. The binder, presumably formed by the method using casein compounds and alkalic substances such as calcium hydroxide, consists of calcium casenates. Consequently, proteins, together with Portland cement, form a type of cement for stabilising soils with little carrying capacity.

US Patent 3 227 569, Thompson et al concerns quality improvement of sand or similar fine grained ballast materials in order to fulfil the set requirements for use with Portland cement or asphaltbound types of concrete. The process is based on treating two fine-grained, and therefore useless, sand fractions for making concrete by mixing in proteins in combination with alkalic substances such as Portland cement. Characteristic of this particular method is pre-treatment of the sand with subsequent storage. With such a treatment, the amount of small particles is reduced by agglomeration. (The small mineral particles form clusters with larger particles by addition of proteins and alkalies, calcium hydroxide or Portland cement). The effect of the treatment is demonstrated by means of two tests, namely, a test of the sand equivalent

3

value and a screening test. In certain cases even the plasticity index is measured. The method is also said to be suited for changing "unsuitable sand" into sand suitable for air entrained concrete. It is known that the amount of fine ballast particles is of great importance for the formation and stabilisation of air pores in concrete. The greater the amount of these fine particles, the lesser ballast material will be suitable for forming air pores.

In the example found in the patent text, casein is used consistently. Wheat gluten has been used but the result proved less satisfactory. The sand equivalent value was raised from 70 at a zero test to 78 for the wheat gluten. For casein a value of 84 was achieved, which proves that casein is the most interesting substance for the intended effect.

Six examples of making concrete are given, of which three are carried out with treated sand. A mixture of casein, Portland cement and calcium hydroxide is added, with 1% by weight, to sand containing 7% by weight of water. This pre-mixed sand was stored for half an hour before the concrete was mixed. Mixing concrete with such a treatment deviates considerably from conventional concrete mixing techniques where additives are added upon mixing of the concrete. The air pore-forming effect is equivalent to the effect obtained when using air pore forming cement, i.e. cement where air pore-forming substances have been added at the grinding. Such types of cement are designated IA, IIA och IIIA according to ASTM 150-78a (=Air-entraining addition to be interround with clinker, ASTM C 226-75).

The pre-treatment process of sand containing large amounts of fine particles as well as the air mixing effect mentioned in the US Patent 3 227 569 differs considerably from the learning of the present invention.

The method according to the invention means that cereal storage protein as gluten alone is used in a determined sequence as an air pore former, an air pore stabiliser and with water repellent qualities in hardened concrete.

The cereal storage proteins have unique surface chemical qualities. The best known example is gluten proteins from wheat, which will give a gelation together with water, which is utilized in several types of foods (by baking of bread, production of pasta products and so on). The gluten protein corresponds to about 10 per cent of the weight of the wheat grain and the separation of the starch and gluten fractions will be made in industrial scale by means of different processes, e.g. the Alfa Laval-Rasioprocess. Storage proteins from other cereals for example rye, triticale, barley or oats can be obtained by reduction of the starch from flour dispersed in water by means of centrifugation. All these water unsoluble proteins from cereals is a form of storage nutriment, thereby the expression "storage proteins", and they are often indicated as gluten proteins. In the following text is with the expression "gluten" indicated said kind of proteins, which can be produced by means of conventional industrial processes. By this gluten the protein content is about 70 per cent by weight. The remaining part consists of lipids (6—8 per cent), starch (10 per cent) and water (8—15 per cent). By different types of gluten also the origin of the gluten is indicated, e.g. wheat gluten, rye gluten.

Surprisingly it has been shown that a mixing of small amounts of gluten into concrete mass will give a stable air pore forming in the desired degradation of the pore dimension resulting in an increased resistance in the concrete. Further, the gluten is plasticizing the mass, i.e. reduction of water is possible by constant consistency or a better consistency by constant water cement ratio is obtained increasing the stability and neutralizing the separation of the contained materials. The best effect will be obtained by means of wheat gluten, but similar results will be obtained also with other kinds. The amount of gluten in dry weight which is applicable is in the range 0.5—2 per cent of the cement weight and preferably 0.5—1 per cent. The gluten can either be added in the form of powder or predispersed in liquid. The following examples is chosen to show the principles for adding gluten in concrete mass as well as in premixed dry products packed in sacks or distributed in bulk and also adding in connection with mixing.

By dispersing the gluten in liquid it has been shown that the liquid is preferably not neutral but basic. In the following two examples are shown how a dispersion can be prepared. The concrete in itself is basic and by using a basic liquid for the preparation a cooperation will consequently occur between the liquid and the concrete in this respect.

As has been shown that cereal storage protein and preferably gluten has a very advantageous effect as an air pore forming agent in air entrained concrete. Such proteins are organic substances but are in spite of this very stable substance in contrast to some other organic substances. Unstable substances have to be avoided as additive to concrete. For example casein is a nutrition for aerobic micro-organisms which will produce ammonia under integration of the casein. Gluten will not bring in its train such disadvantages effects.

By using cereal storage proteins as gluten in air entrained concrete to form air pores, the pore forming do not depend on the fraction of the filler in a concrete mass as by other kinds of additives. As will be shown in the following examples also a very fine graded filler can be used and there will be no need for separating finer fractions from the filler or up-grading the finer particles by forming aggregates.

Example 1

Gluten of wheat in powder form

a) Wheat gluten is weighted and mixed directly as a powder in the dry materials which are contained in the mass which will be prepared. The mixing is preformed in a mixer which distribute the gluten evenly among the other ingredients in a dry mixture. The gluten can also be mixed into the binding agent as the cement or the cement together with other additives. After the dry mixing the mixture can be distributed for further storing or packing or water can be added and also other possible additives and be mixed ready for use.

b) Wheat gluten is added to prepared dry products as dry mix either before, at the same time or after the adding of the water.

c) Wheat gluten is added during the mixing to other materials according to choice irrespectively if the ballast or other materials are dry or not. In most cases the ballast is containing a certain amount of water, i.e. the material have in its state of use a certain moisture content.

The dispersing of the gluten in powder form occurs substantially when water is added to the cement and the index of pH increases.

Example 2
Gluten of wheat from which the fat is removed is added in the form of powder
The same sequence for adding is used as described in Example 1.

Example 3
Triticale gluten in a prepared suspension
Triticale gluten is stirred in water in a concentration of about 10 per cent by weight to a milk similar suspension. This colloidal suspension is added to the mortar or the concrete when the materials are filled into the mixer, at the same time as water is added and injected into the water or mixed into the same or separately in the end moment of the mixing. In the last case it is important that the mixing period will be sufficient long for forming of the air pore system.

Example 4
Gluten in basic suspension prepared for storing
20 per cent by weight wheat gluten is added to 80 per cent by weight ethyl alcohol (96 percentage). During stirring is added a solution of 10 per cent by weight natrium hydroxide in 90 per cent by weight water so that the ratio between ethyl alcohol:natrium hydroxide solution will be 75:25 by weight. This means that the relations by weight are such that the contained gluten is 75 parts (16 per cent), water-ethyl alcohol (4:96) 300 parts (63 per cent) and water-sodium hydroxide (90:10) 100 parts (21 per cent). This gluten dispersing is stable and can be utilized as a suspension for storage or be added directly to the mortar or concrete. The adding can occur as described in Example 3. Stable suspensions for storage are simple to dose with great accuracy. By means of the high index of pH in the suspension the surface-activity of the gluten is strengthened.

By mortar or concrete mass is also included mixtures with a binder in which instead of sand or crushed rock materials also materials as puzzolanes, slag or inert fine particle materials are used.

Generally the gluten is preferably used as a powder by premanufacturing of ready mixed dry mixtures and as a suspension by adding directly by the mixing of the concrete mass.

The following datas will show the results from tests relating substantially to mortar with cement preferably Portland cement as a binder. Completing tests includes cement paste as well as concrete.

Cement paste is a part of the concrete and concrete will be the result when the coarse ballast will be added to the paste. In the concrete technique to coarse ballast is counted all material with a particle dimension from 4 mm and over. As the air pore system is situated in the cement mortar or cement paste of the concrete no surprising phenomena will occur but the properties which are obtained in cement mortar or cement paste will have relevance also to the concrete.

Testing dates 1
Concrete paste (Portland cement) with a water cement ratio of 0.30
The gluten additive is counted in per cent of the cement weight. The mixing was made in a standard mixer for testing of cement. Gluten was added as powder in the dry cement before adding water.

| Per cent wheat gluten (dry weight) | Volume air pores, per cent |
|---|---|
| 0 | 0 |
| 0.1 | 3.7 |
| 0.2 | 6.8 |
| 0.3 | 11.0 |
| 0.5 | 19.0 |
| 1.0 | 26.0 |

The same result was obtained with a cement paste of a harder consistency with a water cement ratio of 0.28.

Testing dates 2
Cement paste of Portland cement

500 g standard Portland cement
500 g normal sand 0—0.5 mm
500 g normal sand 0.5—1 mm
500 g normal sand 1—2 mm
250 g water

Porosity (air pore volume) was adjusted by means of wheat gluten according to the following.

| Per cent wheat gluten (dry weight) | Volume air pores, per cent |
|---|---|
| 0 | 3.0 |
| 0.10 | 13.7 |
| 0.18 | 20.8 |
| 0.20 | 23.0 |
| 0.50 | 31.0 |
| 1.0 | 35.5 |
| 2.0 | 40.0 |

Testing dates 3
Comparison have been made with a constant amount of adding by variating water cement ratios
In the tests have also been used two different liquidaisers, liquidaizing additive 1 is based on melamin and additive 2 is based on naphtalene. The amount of wheat gluten is 0.18 per cent of the cement weight and the ratio of the paste is 1:3 (cement:sand) in parts by weight. The sand had the fraction which was utilized in the test 2. The amount of liquidaiser was 1 per cent dry weight according to the cement weight.

Air pore volume in per cent

| Watercement ratio | 0-mixture no additives | Gluten added | Gluten +additive 1 | Gluten +additive 2 |
|---|---|---|---|---|
| 0.30 | 14 | — | 10.7 | 16.3 |
| 0.35 | 5 | 10.3 | 10.5 | 19.0 |
| 0.40 | 4 | 15.7 | 14.0 | 20.5 |
| 0.45 | 4 | 18.4 | 17.0 | 21.8 |
| 0.50 | 4 | 22.0 | 19.5 | 21.7 |
| 0.55 | 4 | 25.0 | 19.7 | 21.5 |
| 0.60 | 4 | 25.2 | 19.3 | 20.8 |
| 0.65 | 3 | 25.3 | 19.0 | — |
| 0.70 | 1.5 | 25.0 | — | — |
| 0.75 | 0 | 24.8 | — | — |

Testing dates 4
Bending tension strength and compression strength, related to cement-mortar 1:3, water cement ratio=0.50 by different content of air pores (wheat gluten amount) and testing times

Dimension of the testing bodies: 40×40×160 mm

| Air pore volume per cent, testing age | Bending tension strength (Mpa) | Compression strength (Mpa) |
|---|---|---|
| 3.0 (no additives) | | |
| 1 day | 3.8 | 17.5 |
| 7 days | 7.2 | 38.5 |
| 28 days | 9.5 | 57.0 |
| 13.0 | | |
| 1 day | 2.4 | 7.5 |
| 7 days | 4.7 | 22.0 |
| 28 days | 6.3 | 32.5 |
| 23.0 | | |
| 1 day | 1.6 | 4.5 |
| 7 days | 3.3 | 13.0 |
| 28 days | 4.7 | 19.0 |

Studies of the structure in cement paste and cement mortar with sweap electrone microscope has verified that pore dimensions and the fraction of pore dimensions is in the range of 30—60 µm. Further is indicated a determined securing mechanism of the air pores by means of a lamella structure at the surface of the air pores.

The expression "cement" is in the foregoing used in its more extended meaning and includes by side Portland cement types also other hydraulic binders as aluminate cement, slag cement, alkali activating slags, plaster and other. Terms as "cement mortar", "cement paste" and others will have a corresponding widened significance.

## Claims

1. Method for the production of concrete mass for casting of concrete including the steps of supplying to a mixer, concrete components comprising binder, ballast, and air-pore forming substances and liquid for activation of the binder; mixing of said components until a substantially homogeneous mass is obtained, characterized in that gluten cereal storage protein in the form of a substantially dry powder is used as said air-pore forming substance and is added to the other components in the amount of 0.5 to 2.0% by weight of said binder without any substantially presence of casein.

2. Method for the production of concrete mass for casting of concrete including the steps of supplying to a mixer, concrete components comprising binder, ballast, and air-pore forming substances and liquid for activation of the binder; mixing of said components until a substantially homogeneous mass is obtained, characterized in that gluten cereal storage protein is added to the other components in the form of a liquid dispersion having a basic pH and comprises substantially the following:

| | |
|---|---|
| Gluten cereal storage protein | 75 parts |
| Water-ethyl alcohol solution in the proportion 4:96 | 300 parts |
| Water, sodium hydroxide in the concentration 90:10 | 100 parts |

whereby the gluten cereal storage protein and the ethyl alcohol solution at first are mixed and then the mixture obtained is added to the sodium hydroxide solution.

## Patentansprüche

1. Verfahren zum Herstellen von Betonmasse zum Gießen von Beton mit den Schritten: Zuführen von Betonbestandteilen die Binder, Ballast und Loftporen bildende Substanzen und Flüssigkeit zur Aktivierung des Binders enthalten, zu einem Mixer; Mischen der genannten Komponenten, bis eine im wesentlichen homogene Masse erhalten wird, dadurch gekennzeichnet, daß Gluten Getreide-Speicherprotein in Form eines im wesentlichen trockenen Pulvers als die genannten Luftporen bildende Substanz verwendet und den anderen Komponenten in einer Menge von 0,5 bis 2 Gew.-% des Binders im wesentlichen ohne Gegenwart von Kasein, zugeführt wird.

2. Verfahren zum Herstellen von Betonmasse zum Gießen von Beton mit den Schritten: Zuführen von Betonbestandteilen, die Binder, Ballast und Loftporen bildende Substanzen und Flüssigkeit zur Aktivierung des Binders enthalten zu einem Mixer; Mischen der genannten Komponenten, bis eine im wesenltichen homogene Masse erhalten wird, dadurch gekennzeichnet, daß Gluten Getreide-Speicherprotein den anderen Komponenten in Form einer Flüssigdispersion mit einem basischen Wert und im wesentlichen folgenden Inhalts zugeführt wird:

| | |
|---|---|
| Gluten Getreide-Speicherprotein | 75 Teile |
| Wasser-Ethyl-Alkohol LÖsung im Verhältnis 4:96 | 300 Teile |
| Wasser, Natrium Hydroxid in der Konzentration 90:10 | 100 Teile |

wobei das Gluten Getreide-Speicherprotein und die Ethyl-Alkohollösung zunächst gemischt und dann die erhaltene Mischung der Natrium-Hydroxydlösung zugefügt wird.

**Revendications**

1. Procédé de production d'une masse de béton pour la coulée du béton incluant les étapes suivantes: introduction dans un mixeur des composants du béton comprenant le liant, le ballast, et les substances formant les pores à air et un liquide pour activer le liant; mélangeage desdits composants jusqu'à l'obtention d'une masse sensiblement homogène, caractérisé en ce que la protéine de gluten de céréale stockée sous la forme d'une podure substantiellement sèche est utilisée comme substance formant les pores à air et est ajoutée aux autres composants en quantité de 0,5 à 2,0% en poids dudit liant en l'absence substantielle de la caséine.

2. Procédé de production d'une masse de béton pour la coulée du béton incluant les étapes suivantes: introduction dans un mixeur des composants du béton comprenant le liant, le ballast et les substances formant les pores à air et un liquide pour activer le liant; mélangeage desdits composants jusqu'à l'obtention d'une masse substantiellement homogène, caractérisé en ce que la protéine de gluten de céréale stockée est ajoutée aux autres composants sous la forme d'une dispersion liquide ayant un pH basique et comprend substantiellement les composants suivants:

| | |
|---|---|
| Protéine de gluten de céréale stockée | 75 parties |
| Solution d'eau-alcool éthylique dans la proportion de 4:96 | 300 parties |
| Eau, hydroxyde de sodium à la concentration de 90:10 | 100 parties |

et en ce que la protéine de gluten de céréale stockée et la solution d'alcool éthylique sont mélangées en premier lieu, puis le mélange obtenu est ajouté à la solution d'hydroxyde de sodium.